# EUROPEAN PATENT SPECIFICATION

(11) **EP 3 011 216 B1**
(45) Date of publication and mention of the grant of the patent: **07.03.2018**
(21) Application number: 14777928.4
(22) Date of filing: 09.09.2014
(51) Int. Cl.: F16L 29/04, B60S 5/00, B67D 7/00, B67D 7/02, B67D 7/46, F16L 37/413

(54) **A POURING DEVICE FOR FILLING UP A LIQUID IN A RESERVOIR, PARTICULARLY IN THE WINDSCREEN WASHER RESERVOIR OF AN AUTOMOTIVE VEHICLE AND THE USE OF THIS DEVICE**
TROPFVORRICHTUNG ZUM FÜLLEN EINER FLÜSSIGKEIT IN EINEN BEHÄLTER, INSBESONDERE IN EINEN SCHEIBENWASCHBEHÄLTER EINES KRAFTFAHRZEUGS, UND VERWENDUNG DIESER VORRICHTUNG
DISPOSITIF VERSEUR PERMETTANT LE REMPLISSAGE D'UN LIQUIDE DANS UN RÉSERVOIR, EN PARTICULIER DANS LE RÉSERVOIR DE LAVE-GLACE D'UN VÉHICULE AUTOMOBILE ET UTILISATION DE CE DISPOSITIF

(43) Date of publication of application: 27.04.2016
(73) Proprietor: Iwanejko Electronics, Zdzislaw Iwanejko, 00-159 Warszawa (PL)
(72) Inventor: IWANEJKO, Zdzislaw, PL-00-159 Warszawa (PL)
(74) Representative: Balinska, Ewa
(86) International application number: PCT/PL2014/050054
(87) International publication number: WO 2016/039652

(56) References cited:
- US-A- 5 467 806
- US-A- 5 651 259
- US-A- 5 853 025
- US-A1- 2004 025 968
- US-B2- 8 028 729

## Description

The present invention relates to a pouring device for refilling a liquid, particularly in a reservoir located in a location difficult to access, such as, for example, windscreen washer liquid reservoir in an automotive vehicle, in particular to refilling a liquid up to specific level or pressure, and the use of this device for refilling a liquid in a reservoir or a tank.

There are known cases where an access to a reservoir is difficult and topping liquid up in it is bothersome. For example, topping or filling the wind-shield washer tank up in the automotive vehicle requires lifting of the front bonnet, unscrewing the cap, pouring liquid through a funnel from a supplementary container, checking the liquid level and optionally topping it up again. During these operations there is no control of the liquid level, whereby the liquid spills and hands of the operator become soiled. Some liquids contain flammable and harmful to health and environment substances and the contact with them and spilling them is inadvisable. Similar problems are associated, for example, with the need to filling the engine oil up in an automotive vehicle. Both the liquid used for the windscreen washer as well as the engine oil contain environmentally harmful substances that should not get to it.

There are known in the art many solutions of pouring devices for pouring different kinds of liquids into tanks or containers, from storage tanks or containers in a manner ensuring protection against liquid leaking out, including leaking into the environment. The main elements of these solutions are ports and connecting devices, connecting the container to be filled to a liquid storage tank.

It is known for example from U.S. 5,467,806, which discloses a pouring device according to the preamble of claim 1, a two-element joining construction consisting of a male coupling part and a female coupling part, which are detachably joined together to provide liquid flow between a liquid storage tank and a liquid dispensing conduit as well as for closing a connection between the environment and the storage tank and the conduit. The female coupling part forms an outflow having a peripheral flange located near the outwardly projecting end. The male part of the connector comprises a tubular member with an axial channel that member is connected at one side to the hose connection, which is further connected to a metering pump, and at the other side, it is ended with a convex closing wall, wherein two lateral openings located opposite to each other on the peripheral surface of the tubular member, close to the closing wall, are provided, which are covered in the disengaged position of the assembly with a sleeve member slidably mounted over the tubular member and sealed relative to its exterior surface. The male part is provided with a lever ratchet member which, upon insertion of the male part into the female part, snaps onto the circumferential flange of the female part thus locks both parts of the assembly in an engagement position.

The coupling assembly known from U.S. 8,028,729 is also designed on a similar principle, which assembly comprises the female member and the male member and additionally it has a block pawl between the connecting members, which is disposed on the outer surface of the plug connector member to block their mutual position in the engagement position.

The above-described coupling assemblies lack of providing an automatic, self-acting termination of the liquid flow after filling the tank to the correct level, which lack can lead to overfill of the reservoir and a liquid leakage into the environment. The locking mechanism of the connection in the known assemblies is in no way associated with obtaining a limit level of the tank filling. Additionally operating of the known connecting devices, especially an activation and release the locking mechanism in the known solutions, can be complicated.

There are known filling devices for filling liquid into tanks installed in places difficult to access, for example in vehicles, such as liquid dispensers of automotive windscreen wasners installed in filling stations or service stations, which dispencers are equipped with pumping apparatuses and valve systems, and nozzles for filling windscreen washer liquid reservoir, as well as with systems for measuring the amount of the pumped liquid and for calculating a charge. Such devices for distribution of a windscreen washer liquid are known for example from patent publications PL 197679, GB 1 145 060, U.S. 6,910,509 and WO 03/093164. Their use is limited only to specific locations and they require opening the front cover of a vehicle in order to have access to the reservoir to be filled and to allow constant observation of the liquid in the tank during filling.

From Patent No. FR 2 895 357 it is known an auxiliary inflow seat used for filling the windscreen washer liquid tank, wherein that inflow seat is located on the front fender of the vehicle in a place easily accessible to the user and is connected by a conduit to the washer liquid reservoir and closed by a flap. The liquid can be filled up by pouring it from the container through that additional inflow pipe, however, because the filled tank is invisible during topping it up, the overfilling and liquid leakage can be caused.

From GB 2 360 986 is known a system for filling the windscreen washer liquid reservoir comprising a filling nozzle for supplying a liquid and a liquid receiving system mounted on the vehicle body in a location which is accessible from outside, consisting of a connection part having a shape adapted to the shape of the filling nozzle, which nozzle is in turn connected to a flexible feeding pipe, which is connected to a filled liquid container or to a liquid distributor. This solution has neither automatic lock, nor automatic release of a connection and closing the flow when the tank is fully filled up.

All known, described above devices for filling up a liquid in the reservoir located in a hardly accessible locations, such as windscreen washer liquid reservoir, have disadvantages such that they are lacking of a mechanism for automatic locking and automatic releasing of the connection to the reservoir intended to filling up after finishing the filling up. Moreover, they nave further disadvantage such as they require serious interference in the structure of the car during assembly, through drilling of metal elements of the car body. In most cases, known pouring systems do not provide automatic termination of the pouring after reaching by the liquid the proper level, or in other cases they are very complicated and expensive, as disclosed, for example, in DE 197 18 451 and US 5,853,025.

Accordingly, there is a need to further improve this type of solutions in order to develop a device for filling up a container located in difficult to access location, for example for filling up the windscreen washer liquid reservoir in a vehicle, which device being characteristic of a simple and reliable structure and a relatively low weight, and which will require from the user neither complicated maintenance, nor control of the liquid level in the filled reservoir and, preferably, which can operate without an additional energy supply source.

Therefore, the object of the invention is to provide a pouring device for filling up the tank located in difficult to access place, such as in particular the windscreen washer reservoir, located in the engine compartment under the front hood panel of the vehicle, which device would provide automatically stabilization and locking of the connection to the reservoir to be filled in a specific position and automatic release of the locking and simultaneous releasing of the connection and tight sealing of the liquid flow after filling the reservoir up to the proper level.

Also, the further object of the invention is to provide a pouring device ensuring dimensional flexibility during assembly in various applications, in particular, which would be suitable for installation in all types of vehicles both newly manufactured and already existing and which would ensure a tight and reliable connection to the reservoir to be filled.

Another object of the invention is to provide a pouring device which could be used to refilling a liquid in the difficult to access tank both from a small container containing a spare liquid, in particular from the ecological packaging of "Doypack" or "Pouch" type, which are known on the market, as well as from a liquid distributor at the petrol station or from another installation for a liquid.

A further object of the invention is to provide a pouring device which is simple to operate, starting-up and connecting of which to the reservoir to be filled would be performed with one simple sliding movement in one direction, without having to open the hood of the vehicle in order to avoid the risk of overfilling the filled reservoir.

The further aim of the invention is placing of the inflow portion of the pouring device in a vehicle such that, in the case of application in already existing vehicles, it does not cause too high additional installation cost and an increased risk of corrosion of the car body elements.

Further another object of the invention is to provide a pouring device having a simple structure which does not contain many structural parts in order to ensure reliable functioning of its automatic mechanism for locking and releasing the connection to the reservoir and for automatic closing the connection and with no risk of liquid leakage in the case of soiling its inflow part installed at the vehicle body, which soil can occur during operation, for instance during driving.

The above indicated and other aims and objectives of the invention have been reached by the following proposed construction of the pouring device for filling up a liquid in the reservoir, in particular located in a difficult to access location, from a container or a tank of spare liquid or from a liquid system, in particular for filling up liquid in the windscreen washer liquid reservoir from a liquid container or distributor, wherein the device comprises an inflow unit and a liquid pouring unit which are adapted to be connected to each other and to create a sealed connection between the inner space of the reservoir being filled, and the interior space of the spare liquid container equipped with mechanism for locking and releasing of the connection, wherein the liquid pouring unit comprises an outflow pipe, which is connected at one end to the supply conduit connected to the spare liquid container or installation and at the other, free end closed with a closing surface, and wherein at the closing surface side and in vicinity of this surface, the outflow pipe has at least one side outflow opening disposed on a side surface thereof and is equipped with a closure pipe slidably disposed over and around its outer surface which pipe is slidably disposed in the holder of the liquid pouring unit. Moreover, on the outer surface of the outflow pipe, a biasing member is provided, preferably a coil push spring of the pouring unit, biasing the closure pipe to the position in which it closes tightly at least one side outflow opening of the outflow pipe, while the filler unit comprises the inflow pipe, which is at one end terminated with the seat, for sealingly receiving the closure pipe, and at the other side it is connected by flow communication to the reservoir to be filled, according to the invention being **characterized** by a lock-release mechanism provided downstream of the inflow unit, looking in the direction of the flow of the filled liquid into the reservoir, for blocking the liquid communication between the outflow pipe and the inner space of the reservoir to be filled in a filling position and for releasing the locking, and at the same time for automatically closing the liquid communication after filling the reservoir up to the given level or pressure value, the lock-release mechanism comprises a liquid level sensor or filling pressure sensor, arranged in or on the reservoir being filled and an actuator element cooperating with the ratchet element provided with a latch projection which is adapted in shape to the outflow pipe lock recess, located near the closed end of the outflow pipe and adapted to engage into this outflow pipe lock recess during movement of the outflow pipe to the pouring position and exiting from said lock recess by the action of an actuator member or by turning the outflow pipe around to allow the outflow pipe return to its rest position, wherein the latch protrusion is located in a path of the movement of the lock recess of the outflow pipe during its movement to the pouring position.

In other words, according to the invention, the latch projection of the ratchet member of the lock-release mechanism is arranged in the space delimited by the assembly of the said units connected to each other, namely the liquid pouring unit, the inflow unit and the lock-release mechanism, in the flow path of the liquid being topped up.

In a preferred embodiment, a seal is provided between the outflow pipe and the closure pipe, which is selected in such a way that it creates a sealing between the outflow pipe and the closure pipe and at the same time stops the outflow pipe in its resting position and protects it against pushing it into the closure pipe, in particular the sealing is in the form of "O-ring" gasket arranged in the groove provided on a closing cap defining the closing surface of the outflow pipe.

Preferably, the actuator member may be in the form of at least one of the following members: a lever, a lever connected to the tension member (C), an electromagnet (E), an electric motor, a guide-pressure plunger, a membrane or a diaphragm, a string, or any combination of these elements with each other, wherein the lock-release mechanism further comprises at least one actuating means selected from the group consisting of: a liquid level sensor or pressure sensor, a float valve, an electric sensor and/or optoelectronic sensor which means can be used individually or in combination with each other and arranged in and/or at the reservoir to be filled.

In one preferred embodiment the lock recess is one of at least one outflow opening of the outflow pipe of the liquid pouring unit, optionally the outflow pipe is provided with the cap arranged on its closing surface side, while the lock recess is placed on the side surface of the cap.

According to the invention the liquid pouring unit comprises, preferably, the outflow pipe, which is connected at one side to the supply conduit or a feeding pipe connected to the supply container/packaging or to the system of the topped up liquid, and at the other side it is closed with the closing surface, preferably in the form of the cap.

In an embodiment of the invention, the outflow pipe at its end facing the feeding pipe or supply conduit, is connected in a non-sliding and non-rotatable manner to the holder, preferably tubular, arranged around the outside of the said pipe, which holder receives the closure pipe which in turn is slidably arranged for rotation on the outflow pipe, wherein the outflow pipe at the end facing the side of the closing surface of said outflow pipe is provided with at least one outflow opening disposed on a side surface thereof. In a preferred embodiment, close to the end of the outflow pipe facing the closing surface, in particular on the side surface of the cap, the lock recess is provided. Further, around the outer surface of the outflow pipe a pressure spring of the pouring unit is arranged, guided on the outer surface of the outflow pipe and rested at one side on the inner radial projection of the closure pipe, and at the other side on the abutment surface which is preferably a front surface of the supply conduit or the feeding pipe.

According to the present invention, preferably, the coil spring of the liquid pouring unit has a flat characteristic, while having a relatively large ratio of its longitudinal dimension, i.e. a spring length, to its diameter, which ratio is in the range from 1:30 to 1:100. At one side, the tubular holder is terminated with the clamping grip of the supply conduit or feeding pipe which conduit extends to the liquid spare container or to the supply installation, or to the liquid distributor, wherein said clamping grip is tighten by the nut.

In an embodiment of the invention the holder of the liquid pouring unit is formed so as to indicate the correct insertion of the pouring unit into the seat of the filler unit and/or on the outer surface of the tubular holder of the pouring unit a marking is placed indicating the correct insertion of the pouring unit into the seat of the filler unit.

According to an aspect of the invention, the outflow pipe of the pouring unit in the resting position is hidden and covered in the closure pipe and its outflow openings are closed by the closure pipe and secured against leakage of liquid from the outflow pipe by a sealing gasket which is arranged at the outer surface of the outflow pipe near its projecting end facing its closing surface and, on the inner surface of the closure pipe at one side and at the other side by a sealing, preferably in the form of the O-ring type or a rolling diaphragm.

In the further preferred embodiment, the cap arranged on the outflow pipe side facing the closing surface is provided at its front side on the front surface of the cap with the recess, preferably in the shape of a cone, a cylinder or a section of a sphere or another rotary body or part thereof.

In a further embodiment of the invention, the closure pipe of the liquid pouring unit is provided on its side facing toward the filler unit with the free end terminated slightly conically, wherein the cone convergence pointing towards this free end of the closure pipe is preferably in the range 1-15°, wherein at this conically shaped portion of the end of the closure pipe the sealing is arranged, preferably in the form of a sealing ring of the O-ring type, and additionally or optionally the inner surface of the closure pipe end projecting from the tubular holder of the liquid pouring unit is slightly inclined conically, wherein the inclination is divergent in a direction to the said end of the closure pipe.

The filler unit in an embodiment of the invention comprises an inflow pipe having a seat at one end, the seat preferably is closed with the cap or lid or flap, and at the other end said inflow pipe being in a liquid communication to the reservoir to be filled. Furthermore, downstream of the filling unit, looking in the flow direction of the topped up liquid, a lock-release mechanism is provided which mechanism arrests the outflow pipe of a liquid pouring unit in the operating position that is in the pouring position, in which it is connected by means of liquid communication with the reservoir to be filled, and which said mechanism automatically releases the lock of the outflow pipe, after filling up the reservoir with the liquid to a desired level or a desired pressure.

Since according to the invention the lock-release mechanism is located downstream of the filler unit, so it is in an unused position covered by this filler unit and sealed against the environment polutions, and so it is in this way protected against contamination. In addition, the lock recess of the lock-release mechanism, which in one embodiment of the invention may be formed by one of the outflow openings of the outflow pipe of the liquid pouring unit, is covered in an unused position and tightly sealed by the closure pipe, and thus it is also protected against contamination.

Preferably, according to the embodiment of the invention, the filler unit is mounted directly on the body of the liquid reservoir to be filled up, while the lock-release mechanism for the outflow pipe is disposed in said reservoir and comprises a float lever having at least one arm, wherein at one free end of the lever arm a float indicating the level of the liquid in the reservoir is attached, and the other, opposite end of the lever is mounted pivotally in the reservoir body. Moreover, the lever is provided with a ratchet member extending into the path of the sliding movement of the outflow pipe and in particular in the path of movement of the lock recess, in one of embodiments of the invention, in particular in the form of one of the outflow openings in the outflow pipe, during its movement into the operating position, in the direction of the filled reservoir.

The ratchet member in the preferred embodiment is in the form of the latch projection arranged on the lever arm, preferably the projection shaped and sized to be adapted for entering into the lock recess of the outflow pipe, preferably in one embodiment of the invention into the outflow opening of the outflow pipe with a clearance. Optionally, preferably, the stopper of the movement of the outflow pipe is attached to the liquid reservoir body.

According to a second embodiment of the invention the lock-release mechanism for the outflow pipe is provided with a separate casing of the lock-release mechanism and a casing cover, which are mounted on the vehicle body, preferably on or behind the air inflow grille, on its rear side facing the interior of the vehicle, while the seat of the filler unit is mounted on the air inflow grille on the front side of the vehicle and connected by the inflow pipe to the casing of the lock-release mechanism. The lock-release mechanism casing has a basic part and it is covered with a casing cover, wherein in one embodiment, the casing and the cover of the lock-release mechanism are separated one another by a diaphragm or a membrane which separates them from each other. The casing on one of its side walls has a connection in the form of a stub pipe for a pipe connecting it to the reservoir to be filled, and the first spring of the lock-release mechanism is inserted into the lock-release mechanism casing, the spring is beared on the guiding rod ended with the mushroom head, having the sealing disposed on its side surface and having the front end formed complementary to the respective closing surface of the outflow pipe of the liquid pouring unit, i.e. optionally convexly or concavely, preferably conically. In the wall opposite to the said wall of the casing there is an opening, in which the inflow pipe of the filler unit is mounted, preferably axially with respect to the guiding rod of the first spring, wherein the second end of said inflow pipe projects towards the outside of the casing and is connected to the seat of the filler unit, which seat in a preferred embodiment is immobilized on, or through, the air inflow grille of the vehicle, for receiving the closure pipe of the liquid pouring unit, wherein in the unused position that means in its resting position, the seat is closed by the lid, flap or screwed cap or a similar means. In the cover of the lock-release mechanism the pressure-guide plunger is provided, biasing the ratchet member having an axle, the second end of the axle is inserted into the opening of the cover, wherein said ratchet member is provided with a latch protrusion of the lock-release mechanism extending to the path of the sliding movement of the outflow pipe, in particular of the lock recess of the outflow pipe, which recess in the preferred embodiment of the invention is determined by one of the outflow openings i.e. in the path of the movement of one of the outflow openings of the outflow pipe of the liquid pouring unit during its movement to the working position, that means to the pouring position.

Moreover, a second screw pressure spring of the lack-release mechanism is provided on the axle of the ratchet member, said spring rests with its lower end on the guide-pressure plunger.

According to a further variant of this embodiment of the invention, between the casing and the cover of the lock-release mechanism there is no any diaphragm for separating these two parts from each other, while on the side surface of the pressure-guide plunger an additional sealing element may be optionally arranged.

In this embodiment of the invention, in both described variants, the structure of the device is characterised by a high dimensional flexibility in a wide range, as a longitudinal extension of the device can be adapted and adjusted, to the distance between the attachment place of the seat of the filler unit and the attachment place of the lock-release mechanism casing, in particular its basic part, in the wide range from a value close to zero to about 20 cm. For example, the device may be installed on various types of vehicles having different thicknesses of air-intake grilles, preferably in the range of values near zero to 20 cm, and even more if necessary. The length of the outflow pipe of the liquid pouring unit, which can be of different size can be adapted to the distance between the filler seat and the lock-release mechanism casing, because it is selected in such a way that it can slide out in different distance from the closure pipe, and enter, through the filler unit, into the lock-release mechanism casing attached at a location remote from the seat of the filler unit, for example, at the opposite side of the air inflow grille of different thicknesses, depending on the type of vehicle and it can be adapted to the current distance between the fixed seat of the filler unit, and the fixed lock-release mechanism casing, or to a specific width of the grille.

Such that, the device according to the invention allows convenient access to the reservoir, automatic control of the level of the liquid in the reservoir, with the result that the liquid will not spill.

An additional advantage of the embodiment of the invention is the fact that on the liquid supply side of the pouring device there is only slight pressure, within the range of about 0.07 to 0.25 atm (7 to 25 kPa), preferably from 0.15 to 0.2 atm (15 to 20 kPa) which ensures safe operation and does not require the use of special high pressure sealing elements. In the known solutions for filling up or topping up liquids in reservoirs comprising pump systems usually there is a pressure about 2 atm (200 kPa), which causes increasing risk of leakage and requires additional, resistant to higher pressures sealing.

Additionally, liquid dispensing to the reservoir can be performed with high accuracy by using double-checking of the liquid level in the filled reservoir in the device according to the invention. This double checking is realized by combining of two or more sensors or indicators of the liquid level or pressure, and two actuators to control release of the lock, preferably with using an electromagnet or other suitable means known in the art. Therefore, the above described pouring device according to the invention can be used for pouring or dispensing liquid to or from the various types of containers, including ones located in difficult to access places.

The object of the invention is explained and revealed in more details in the embodiments and with reference to the accompanying drawings, in which
fig. 1 shows a longitudinal section of a liquid pouring unit in the resting state (non-connected) in one embodiment of the closure pipe according to the invention,
fig. 1a - a part of the liquid pouring unit in the resting state in the longitudinal section in another embodiment of the invention with the closure pipe equipped with an additional sleeve insert,
fig. 1b and 1c - a longitudinal section and a cross section along line A-A of the cap of the outflow pipe showing various embodiments of the lock recess according to the invention, respectively,
fig. 1d - the embodiment of the invention with the sealing in the form of a rolling diaphragm,
fig. 2 - a longitudinal section of a device according to the invention having the liquid pouring unit in the operating position and the filler unit and the lock-release mechanism in the first embodiment of the invention,
fig. 3 - a longitudinal section of a lock-release mechanism in a resting state, in the second embodiment of the invention,

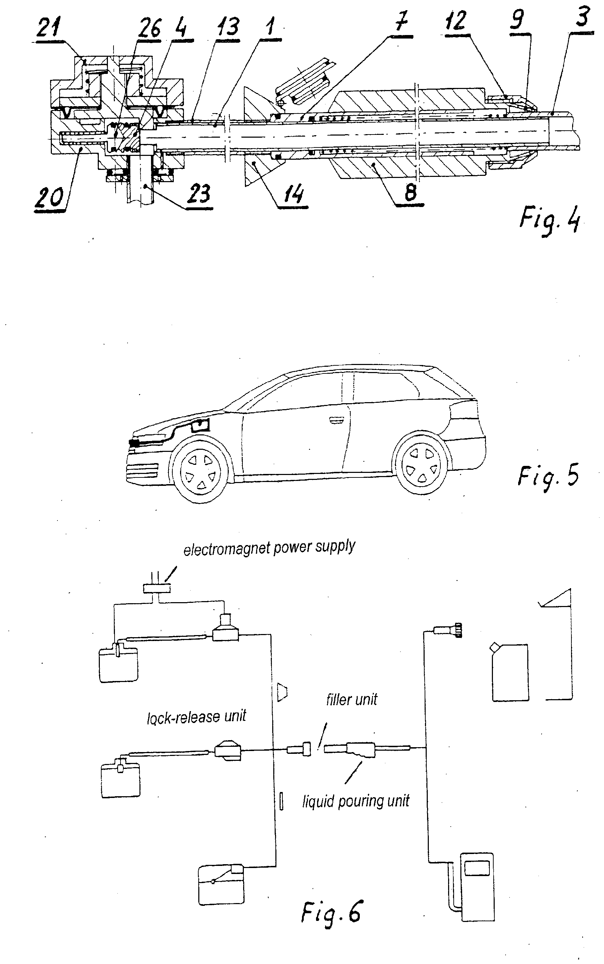

fig. 4 - a longitudinal section of a device according to the invention in a second embodiment equipped with the liquid pouring unit in the operating position (connected) to the filler unit and the lock-release mechanism in the filling position,
fig. 5 - an example of mounting of the device according to the invention in a vehicle, schematically,
fig. 6 - different examples of connection combinations and configurations of the device according to the invention in various embodiments, schematically,
fig. 7 - a longitudinal section of the lock-release unit of the device according to the invention in another embodiment with no diaphragm separating the casing from the cover of the lock-release mechanism,
figs. 8a, 8b, 8c - different configurations of the embodiments of the invention device, schematically, including actuators of the lock-release mechanism in various embodiments including float sensor,
fig. 9 - a cross section of the lock-release mechanism in a further another embodiment including the electromagnet as an actuator,

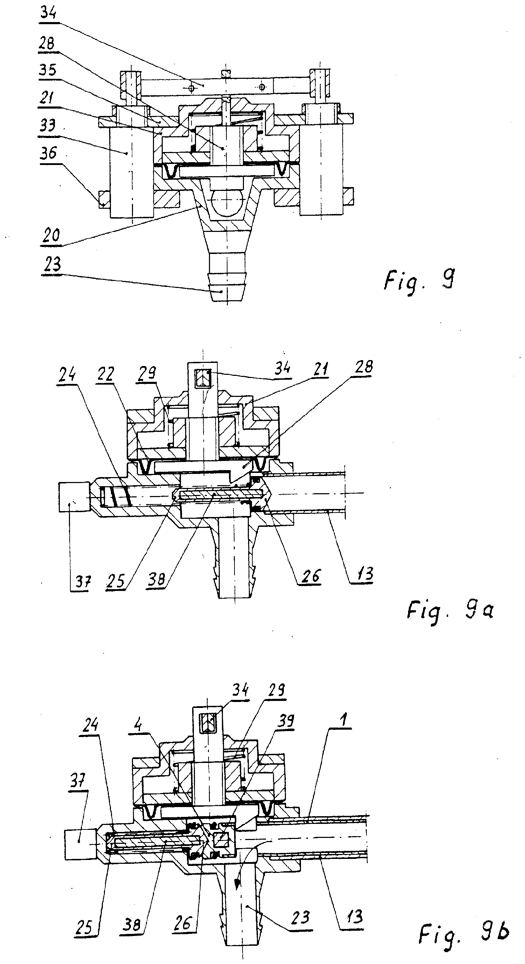

fig. 9a - a longitudinal section of the embodiment of fig. 9 in a resting state,
fig. 9b - a longitudinal section of the embodiment of fig. 9 in a filling state, i.e. working position.

The device according to the invention is designated to serve and to be used generally for filling up a liquid into reservoirs located in difficult to access places from containers containing spare liquid or from distributors and/or liquid systems, particularly in cases where a location of the filler for topping liquid up is distant from the filled reservoir which reservoir during filling may be invisible to a user. Additionally the reservoir can be placed above the filler unit that may be advantageous in some situations. In particular, the pouring device is intended to topping wind-shield or windscreen washer liquid up in the washer reservoir in the vehicle, which is usually installed under the front hood panel of the vehicle in the engine compartment and inaccessible without opening the hood panel, and the invention allows to fill up the reservoir without opening the hood panel.

In such applications, as an optimal location for mounting the filler is selected the air intake grille in front of the radiator, which in most vehicles is located at the front of the vehicle. Due to the different sizes of the grilles, both in relation to the thickness and sizes of the through slots, the invention must ensure proper functioning of the pouring device at different lengths of the transit of different grills and the maximum diameter of the connecting pipe should not exceed 12 mm.

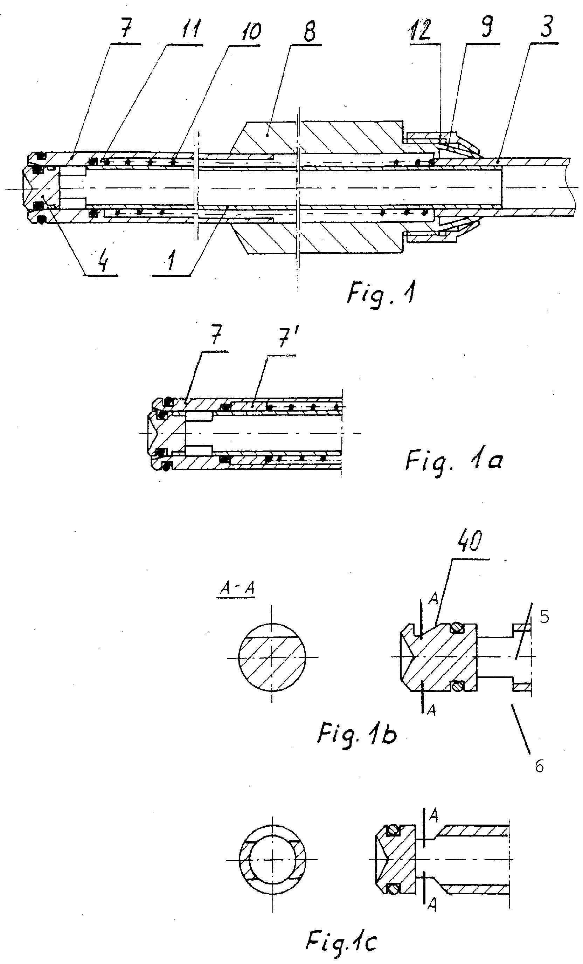

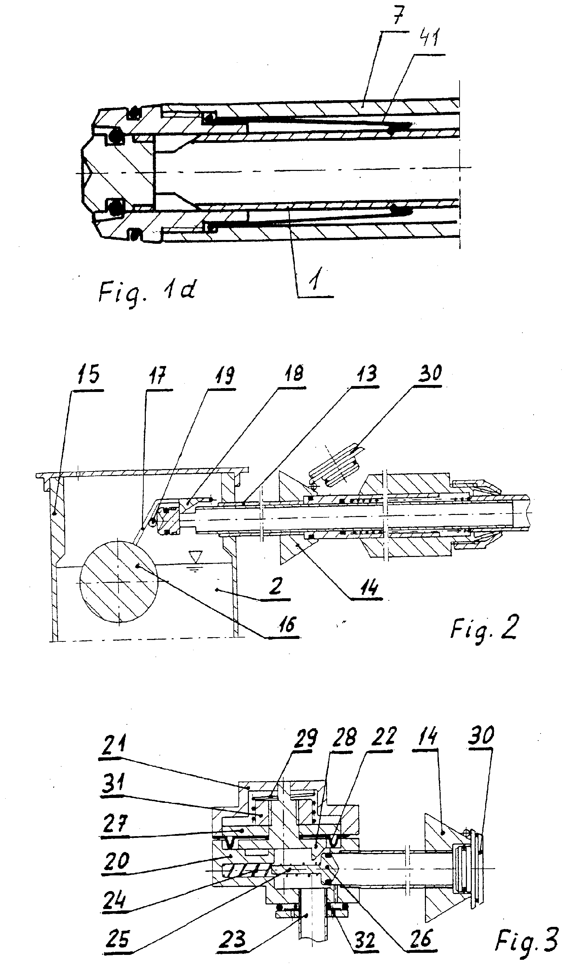

The device comprises the liquid pouring unit N, generally shown in the embodiments in figs. 1-1d, the filler unit and the lock-release mechanism MB for release the outflow pipe **1** of the pouring unit, after filling the reservoir **2** to be filled with the filled up liquid to the required level. The pouring unit comprises an outflow pipe **1** which is connected at one side to the supply or feeding line or conduit **3** connected to the spare liquid container or possibly to a system of such liquid or to a distributor, and at the other side is closed with the closing surface, preferably with a cap **4.** The pouring outflow pipe **1** near to the end facing the cap is provided with at least one, and preferably two, outflow openings **5** and **6,** disposed on the side surface of the outflow pipe **1,** preferably opposite with respect to each other. The pouring unit includes the outflow pipe **1** over which the closure pipe **7** is slidably arranged, which closure pipe **7** surrounds from the outside the outflow pipe **1** and is slidably mounted in the tubular holder **8** of the pouring unit, wherein the holder **8** on one side is terminated by a grip **9** for connecting the feeding pipe **3,** and wherein between the outflow pipe **1** and the closure pipe **7** there is a clearance in the range from 0.01 to **1** mm, preferably from 0.03 to 0.5 mm, in particular approximately 0.15 mm. A spring **10** of the pouring unit is arranged over outer surface of the outflow pipe **1,** wherein one end of the spring abuts an inwardly directed projection **11** of the closure pipe **7** or in another embodiment an additional sleeve **7'** of the closure pipe **7,** whereas its other end abuts an abutment surface, which is preferably the front face of the feeding pipe **3** or conduit **3.** The grip **9** of the feeding pipe **3** is pressed by the first clamping nut **12.** The external shape of the holder **8** of the pouring unit or the indicating mark made on the outer surface of the holder **8,** for example in the form of a longitudinal score or other elongated recesses or protrusion, is formed in such a way as to define the correct position of the pouring unit during insertion of the pouring unit and particularly its outflow pipe **1** into the seat of the filler unit. In the resting state, the free end of the outflow pipe **1** is hidden inside the closure pipe **7,** and its outflow openings **5, 6** are closed by the closure pipe **7** and secured against leakage of liquid from the outflow pipe by a sealing, preferably in the form of at least two O-ring sealings, one of which is located in the groove of the cap **4** of the outflow pipe **1,** and the other in the groove of the closure pipe **7** in order to prevent the uncontrolled outflow of liquid from the outflow pipe (see fig. 1a, 1b, 1c). The groove for the sealing, preferably O-ring, in the closure pipe **7** cooperating with the outflow pipe **1** may be formed by pressing or screwing the additional sleeve **7'** on or into the closure pipe **7.** Optionally or additionally in another embodiment, the sealing has the form of a rolling diaphragm **41** (see fig. 1d) arranged in one embodiment of the invention in the groove between the closure pipe **7** and the additional sleeve **7',** respectively.

In the front surface of the cap **4** closing the outflow pipe **1** the recess or the bulging, preferably in the shape of a cone, cylinder or a sphere section, or in the shape of another rotary body, or a part thereof, is provided.

An outer end segment of the closure pipe **7** is ended slightly conically on the side facing in the direction of the filler unit in order to facilitate insertion of the closure pipe into the seat **14** of the filler unit, wherein the convergence of this conical segment may be small and directed towards that end of the closure pipe **7,** preferably ranging from 1° to 15°, more preferably 3°-6°, and in particular 4°-5°, wherein the larger angles of the convergence are also possible in order to ensure a reliable sealing of the closure pipe **7,** after its introduction into the seat **14** of the filler unit with respect to the inner surface of the seat. Aditionally, at that conical segment of the closure pipe **7** end the sealing is provided, preferably in the form of a sealing ring of the O-ring type. Moreover, in the embodiment of the invention the inner surface of the closure pipe **7** is inclined conically towards its end facing in the working position towards the seat **14** of the filler unit, wherein the slope is divergent in the direction of that end of the closure pipe **7** and is within the limits, preferably between 1° - 45°, more preferably 3°-20°, in particular 5°-15° for proper sealing effect of the sealing placed on the cap **4** of the outflow pipe **1,** preferably in the form of an O-ring. This sealing also has a restricting effect for the backward movement of the outflow pipe **1** from the pouring position to the resting position inside the closure pipe **7.**

The filler unit includes the inflow pipe **13** which on its end facing the pouring unit ends in a seat **14,** preferably closable with the cover or closing flap, and being provided with an abutment surface to limit movement of the closure pipe **7** of the pouring unit. On its second end the inflow pipe **13** is detachably connected, depending on the embodiment of the invention, to the lock-release mechanism casing **20,** or to the body of the reservoir **2** to be filled. The filler unit can be optionally attached in the first embodiment of the invention directly on or at the body **15** of the reservoir **2** to be filled with the windscreen washer liquid or, in the second embodiment, at or on the air intake grille of the vehicle, respectively.

Downstream of the filler unit, looking in the direction of the flow of the filled liquid into the reservoir **2** of the filled up liquid, the lock-release mechanism MB is provided, which locks the liquid flow connection leading the liquid between the pouring unit, the filler unit and the reservoir **2** in the working position, and releases the connection after filling up the reservoir 2 with the liquid to be desired level or desired pressure value, while closing the flow of the liquid through the pouring openings without its leakage. According to the invention the lock-release element of the lock-release mechanism in the form of the ratchet member is disposed within the inner space created and limited by the system of the units of the pouring device while the units are connected to each other, in the following order, starting from the inflow unit followed by pouring unit N, filler unit and the lock-release mechanism MB, in the flow path of the topped up liquid. The lock is provided near the end, or at the end, of the outflow pipe **1** in its operating position /pouring position, i.e. in the extended position from the closure pipe **7** in which it protrudes from the closure pipe **7** to the outside. The lock-release mechanism includes a liquid level sensor, located in, or on, the filled reservoir **2,** or other sensor element cooperating via the actuator or optionally directly with the ratchet element **28.** The ratchet element **28** cooperates with a lock recess **40** of the outflow pipe **1,** located in the end part thereof at the side of its end extending from the outflow pipe **1,** wherein the outflow pipe **1** is provided with at least one lock recess **40,** which in one preferred embodiment may be in the form of at least one lock opening, which can be one, of preferably two, outflow openings **5, 6** of the outflow pipe **1** of the pouring unit.

The lock recess **40** in the preferred embodiment has in its longitudinal section the shape of a triangle or trapezoid, and in cross-section the shape of the segment of a circle limited by the chord (see fig 1b and 1c) and is located on the outer side surface of the cap **4** of the outflow pipe **1.** In another preferred embodiment the lock recess **40** has the form of the lock opening, preferably created by the outflow opening **5** of the outflow pipe, wherein its locking surface, i.e. the front face of the lock recess **40,** or the outflow opening **5,** at the side of the protrudable end of the outflow pipe **1,** is inclined at an angle from about 70° to 100°, preferably from 80° to 95°, and in particular 90° +/-2°, preferably perpendicular in relation to the longitudinal axis of the outflow pipe.

### Example I

In the first embodiment, the lock-release mechanism of the outflow pipe **1** is placed in the reservoir **2** to be filled and comprises the float lever **17,** having a lever arm, wherein at the free end of the arm the float member is attached to indicate the level of liquid in the reservoir, and the other end of the lever arm is pivotally attached to the body of the reservoir **2,** moreover, the float lever **17** is provided with a ratchet member **18** extending in the path of movement of the outflow pipe **1,** and specifically in the movement path of the lock recess **40,** which in the preferred embodiment is the lock opening created by one of the outflow openings **5, 6** of the outflow pipe **1** of the pouring unit, during its introducing via filler unit into the reservoir **2** to be filled. The ratchet member **18** in a preferred realization of the first embodiment of the invention has a form of the latch projection arranged at the pivotally arm of the float lever **17,** wherein said latch projection having in the longitudinal section the shape of a triangle or trapezoid, preferably having the shape and dimensions adapted to insertion into the lock recess **40** or, in another, embodiment, into outflow opening **5, 6** of the outflow pipe **1,** with small clearance.

Optionally, a stopper **19** of the movement of the outflow pipe **1** is attached to the body of the filled liquid reservoir **2.**

In order to top the liquid in the reservoir **2** filled up, the outflow pipe **1** projecting from the holder of the pouring unit N together with the closure pipe **7** are inserted into the seat **14** of the inflow unit, in which the closure pipe **7** is stopped at the abutment surface of the seat **14,** and further movement of the outflow pipe **1** is made possible by moving the holder **8** of the pouring unit N in the inflow direction. Moving this holder **8** of the pourer causes tension of the coil spring **10** of the pouring unit. The outflow pipe **1** introduced into the liquid reservoir **2** to be filled rises slightly the lever **17** of the float **16** with the front face of the cap **4** until the ratchet member 18 of the lever 17 enters the lock recess 40 according to one of the embodiments into the outflow opening **5** acting as the lock recess **40,** which is also the lock opening of the lock-release mechanism MB, and prevents its return due to the action of the force of a tensioned spring **10** of the pouring unit, maintaining the outflow pipe **1** in the locked position. Optionally, further movement of the outflow pipe **1** is prevented, preferably, by the transverse stopper **19.** Slip out of the outflow pipe **1** from the closure pipe **7** uncovers and makes free its outflow openings **5** and **6.** After filling the liquid reservoir **2** up to the desired level the raised float **16** will turn its lever **17** around its point of pivotal attachment, so that the ratchet member **18** will come out from the lock recess **40,** in one of the embodiments of the invention from the outflow **5,** of the outflow pipe **1** and release it from its blocked position, thus causing automatic return back movement of the outflow pipe towards interior of the closing pipe **7** of the pouring unit, and the outflow openings **5** and **6** will be obscured by the closure pipe **7** equipped with the sealing preferably located on its inner surface, preferably an 0-ring type. So that, the openings 5, 6 become sealed against liquid outflow through by the sealing placed on the cap **4** of the closure pipe, between the cap and the closure pipe.

### Example II

In the case when the liquid reservoir **2** to be filled is a reservoir particularly difficult accessible, for example, the wind-shield washer liquid reservoir for the motor vehicle located in the engine compartment, the lock-release mechanism MB of the outflow pipe **1** may be shaped, preferably, in accordance with the second embodiment. The lock-release mechanism MB in this embodiment is also located downstream of the inflow unit looking in the direction of liquid flow to the reservoir **2** during pouring a liquid and is provided with a separate casing **20** and a casing cover **21** of the lock-release mechanism, which mechanism is preferably mounted for example in the area of the air inflow grille of the vehicle or optionally, for example, near the fuel inflow, under the flap closing that inflow, which mechanism is connected by means of the feeding pipe to the reservoir to be filled with the topped up liquid, for example to the wind-shield washer reservoir. To this separate casing of the lock-release mechanism, in front of it, looking in the direction of liquid flow during pouring, the filler unit is also attached. In one preferred embodiment, the diaphragm **22** is arranged between the casing **20** and the cover **21** of the lock-release mechanism MB for the outflow pipe **1.**

The casing **20** of the lock-release mechanism is connected to the reservoir to be filled, for example, to the washer reservoir, with the feeding pipe **13** superimposed on the stub pipe **23** of that casing. In the casing **20** of the lock-release mechanism the first spring **24** of the lock-release mechanism is inserted, and mounted on the guiding rod **25** ending with the mushroom head **26,** at the side surface of which the sealing is disposed and whose front face is formed convexly or concavely, preferably conically, or in the shape of another rotary body or part thereof, wherein the front face of the mushroom head **26** is adapted in shape to the shape of the recess, or optionally the bulging, in the cap **4** surface of the outflow pipe **1,** i.e. respectively also concavely or convexly. In the opposite wall of the casing **20** the opening is provided, in which one end of the inflow pipe **13** of the filler unit is attached, preferably axially with respect to the guiding rod **25** of the first spring **24,** while the other end of the pipe **13** is connected to the seat **14** closed with the cover or flap or cap, for insertion the closure pipe **7** of the pouring unit N. In the cover **21** of the casing of the lock-release mechanism the pressure-guide plunger **27** is provided, biasing the ratchet member **28** having an axle, the second end of which axle, preferably shaped in the form of the projection having a non-rotary body shape, preferably rectangular shape, is inserted into the respective hole of the casing cover **21,** wherein said ratchet member is provided with a latch lip or projection **28**a of the lock-release mechanism extending into the path of movement of the outflow pipe, in particular in pouring position of the lock recess **40** of the outflow pipe **1.** The lock recess in one preferred embodiment is in the form of the lock opening, which is, preferably, the outflow opening **5** of the outflow pipe **1** of the pouring unit, for example, being located at the upper part of side surface of the outflow pipe **1** and simultaneously creating the lock opening, during the pipe **1** sliding movement in a direction to the working position, i.e. to the pouring position and its backward movement from this position to the rest position. Moreover, at the axle of the ratchet member **28** a second pressure spring **29** of the lock-release mechanism is put, guided by the tightening nut **31** and supported with the lower end by the pressure-guide plunger **27.** The first spring **24** of the lock-release mechanism MB together with its guiding rod **25** ended with the mushroom head **26** is located in the casing **20** of the lock-release mechanism, and arranged axially relative to the axis of the inflow pipe. In a preferred embodiment of the invention the side surface of the mushroom head **26** of the guiding rod **25** is adapted in shape to the hole in the casing **20** wall and is provided with an appropriate sealing cooperating with the circumferential surface of the hole and/or in another embodiment with the end of the inflow pipe **13.** The pressure-guide plunger **27** arranged in the inner space of the casing cover **21** of the lock-release mechanism and the ratchet member **28** of the lock-release mechanism equipped with a ratchet projection **28**a, having preferably a triangular or trapezoidal longitudinal section, both cooperate in the operating position, in one preferred embodiment, with one outflow opening **5** of the outflow pipe **1,** which in this embodiment creates the lock opening. In one of embodiments, between the pressure-guide plunger **27** and the ratchet member **28** there is arranged a diaphragm **22,** wherein the pressure-guide plunger **27** is pressed against the ratchet member **28** through the diaphragm **22** by means of the tightening nut **31.**

The diaphragm **22** is made of an elastic material and shaped as a disc having a diameter greater than the diameter of the lower part of the pressure-guide plunger **27** and having a coaxial ring like waviness projecting downwardly below the bottom surface of the diaphragm in order to provide the possibility of a large deflection. The diaphragm has additional two toroidal shaped protuberances, providing a sealing between the casing **20** and the cover **21** and between the ratchet member 28 and the guide-pressure plunger 27 created in a vicinity of the internal opening of the diaphragm and close to the outer peripheral edge.

A second spiral spring **29** of the lock-release mechanism is put on the pressure-guide plunger **27.** During operation the outflow pipe **1** projecting from the holder **8** of the pouring unit **1** together with the closure pipe **7** are inserted into the seat **14** of the filler unit, in which the closure pipe **7** is stopped at the respective abutment surface, and further movement of the outflow pipe **1** is made possible by moving the tubular holder **8** in the direction of the filler unit. Moving this holder **8** the user puts the spring **10** of the pouring unit under tension. Insertion of the outflow pipe **1** into the casing **20** of the lock-release mechanism MB causes lifting of the ratchet member **28** of the lock-release mechanism by means of the rear edge of the mushroom head **26,** optionally provided with a corresponding chamfer, which lifting movement allows further movement of the outflow pipe **1,** until the latch projection of the ratchet member **28** falls into the lock recess **40,** in a preferred embodiment of the invention into the outflow opening **5** of the outflow pipe **1,** constituting this lock recess of the lock-release mechanism. Sliding out the outflow pipe **1** from the closure pipe **7** exposes the outflow openings **5** and **6** of the outflow pipe **1,** causing the liquid to flow away from them. Preferably, the seat **14** of the filler unit is provided with a cover or closing flap **30.** After filling the reservoir **2** with a liquid through the inflow pipe **1,** the float valve FV disposed in the reservoir **2** to be filled with the liquid, shuts off the flow, causing an increase in pressure under the diaphragm **22,** which in this case is an actuator, and lifting the ratchet member **28** of the lock-release mechanism, against the force of the second compression spring **29.**

In addition, in the casing **20** of the lock-releasing mechanism can be, or preferably is located the air admittance valve **32** which feeds ambient air into the space between the cap **4** of the outflow pipe, and the mushroom head **26** during the backward movement of the outflow pipe **1** from its operating position to ensure easier and reliable reversing back of the outflow pipe **1** after the lock of the ratchet projection **28a** of the ratchet member **28** is released.

Optionally, instead of the float valve FV the float member F may be used connected to the tension rod C, which is attached with the other end to the guide-pressure plunger **27** and acts as the actuator, pulling and lifting the guide-pressure plunger after lifting the float F. Alternatively, the level sensor can be used with an electric switch CE connected to the solenoid electromagnet E, which constitutes and acts as the actuator and which after receiving a signal from the sensor with the electric switch CE lifts the guide-press plunger **27** and thus the ratchet member **28** from the lock recess **40.** Optionally, as another variant of the invention, it can be also used the level sensor in the form of a light barrier or a pressure sensor as the starting-up element, functioning as the actuator mentioned above.

Instead of a float valve FV the electronic or optoelectronic or electro-mechanical level sensor may be used, which is arranged in the target reservoir to be filled or a pressure sensor, which, after reaching the appropriate level or pressure of the liquid, sends a signal to the solenoid E for operation and lifting the ratchet member **28** of the lock-release mechanism MB from the lock recess **40** and to release the lock of the outflow pipe **1,** resulting in its automatic return back to the rest position inside the closure pipe **7** of the pouring unit under the force of the coil spring **10,** in which rest position the outflow openings **5** and **6** become hidden and covered by the closure pipe **7** and sealed against an outflow of the liquid, as shown in the drawings.

In Figures 9, 9a, 9b the actuator is shown in the form of at least one electromagnet **33** or the set of the plurality of electromagnets **33,** preferably two, which via a yoke **34** causes pulling out the ratchet member **35** from the lock recess **40.** To secure the current flow through the solenoid only during filling up of the reservoir **2** and to protect it against damage it is preferred to use a reed relay **37** cooperating with the magnet **38** disposed inside of the guiding rod **25** as illustrated in Figure 9a. After entering the outflow pipe **1** and starting to pour a liquid the guiding rod 25 with the magnet 38 is pushed near the reed relay **37** and causes its activation (shorting) - shown in fig. 9b. Once the proper liquid level is obtained in the reservoir, the level sensor or optional pressure sensor switches the circuit on, causing an activation of the electromagnet **33,** or electromagnet set **33.** After returning back the outflow pipe **1** to the resting position and closing the liquid flow by means of the mushroom head **26,** the guiding rod **25** with the magnet **38** move away from the reed relay **37,** causing its breaking and closing the current flow through the electromagnet **33.**

According to a further embodiment of the invention there is no diaphragm between the casing **20** and the cover **21** of the lock-release mechanism MB. In such optional embodiment of the invention, the guide-press plunger **27,** provided in the cover **21** of the lock-release mechanism, with the ratchet member **28** of the mechanism, cooperate in the operating position with the lock recess of the outflow pipe **1,** which optionally, in the preferred embodiment, is constituted by one of the outflow opening **5** of the outflow pipe **1.** On the side surface of the guide-press plunger **27** an additional sealing is arranged, preferably in the form of O-ring gasket, but it can be in the form of another sealing member appropriate to prevent liquid escape. Similarly to previous embodiments, the second spring **29** of the lock-release mechanism MB is arranged on the guide-press plunger **27.** The outflow pipe **1** projecting together with the closure pipe **7** out of the holder **8** of the pouring unit N are inserted into the seat **14** of the filler unit, in which seat the closure pipe **7** stops at the respective abutment surface, and the further movement of the outflow pipe **1** is possible by slidingly pushing the holder **8** toward the filler unit. By pushing this holder **8** the spring **10** of the filler unit is put under tension. The outflow pipe **1** inserted into the casing **20** of the lock-release mechanism and moved forward lifts the ratchet member **28** of the mechanism by a front chamfer of the cap **4** or a part of the mushroom head **26** allowing it to move further until the latch shoulder **28**a of the ratchet member **28** falls into the lock recess **40,** preferably in the outflow opening 5 of the outflow pipe 1. Sliding of the outflow pipe 1 out of the closure pipe **7** exposes its outflow openings **5** and **6** and causes the flow of liquid out. Preferably the seat of the filler unit **14** is provided with the cover or the flap **30.**

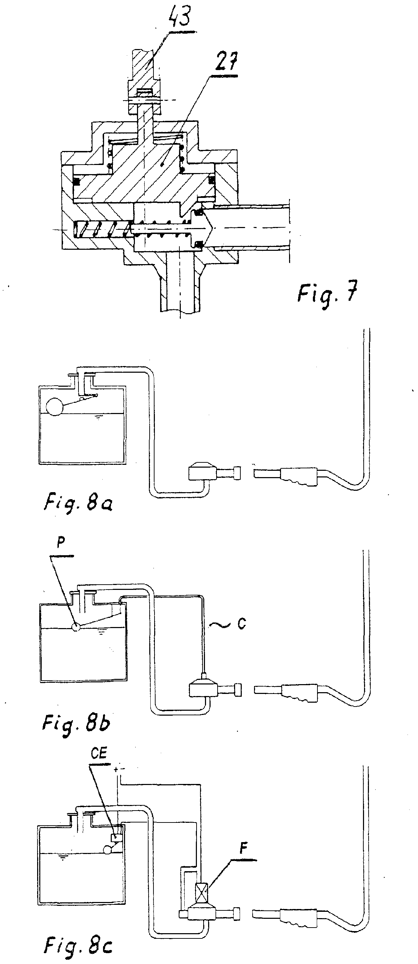

According to further embodiment of the invention, in the reservoir 2 the electrical sensor ES is placed, while the electromagnet E is arranged at the cover **21** of the lock-release mechanism. In this case, after filling the washer reservoir with the liquid, the electrical sensor ES in the reservoir **2** switches the circuit of the electromagnet E on, causing lifting the guide-press plunger **27,** thereby lifting the ratchet projection **28** from the locking recess **40** of the outflow pipe **1,** for example in the form of the outflow opening **5** and releasing the outflow pipe **1** (see fig. 8c).

According to another preferable embodiment of the invention the float valve FV is arranged in the reservoir **2** to be filled with the topped up liquid, the valve FV after obtaining the respective filling level of liquid in the reservoir, shuts off the inflow of the liquid, causing an increase in a pressure under the guide-press plunger **27** and lifting the ratchet member **28** of the lock-release mechanism, against the force of the second pressure spring, releasing the lock of the outflow pipe **1.**

The lock or latch projection **19, 28a** of the ratchet member **28** according to the invention has a shape which allows its introduction into the locking recess **40,** wherein in one embodiment it is formed by the outflow opening **5** of the outflow pipe **1** of the pouring unit, which opening is shaped as described previously above, wherein the lower edge of the ratchet projection **19, 28a** is provided, preferably, with a small arched recess to facilitate the backward movement of the outflow pipe **1,** in order to ensure the correct movement of the guide rod **25** with the mushroom head **26** of the first spring **24** of the lock-release mechanism.

If the user intends during pouring to complete the filling process earlier, he\she turns the holder **8** of the pouring unit N to the left or right around i.e. rotate the holder **8** by an angle of approximately 50°, which results in rotating the outflow pipe **1** with the same angle, lifting of the ratchet member **28** of the lock-release mechanism by the side wall of the outflow pipe **1** and its automatic return to the interior of the closure pipe **7.** The length of the inflow pipe **13** of the filler unit is adapted to the thickness of the radiator grille of a vehicle.

## Claims

1. A pouring device for filling up a liquid in a reservoir from a spare liquid container or from a liquid supply system, in particular for filling up a liquid in the windscreen washer liquid reservoir from a liquid container or distributor, wherein the device comprises a filler unit and a liquid pouring unit which are adapted to be connected with each other and to create a sealed connection between the inner space of the reservoir (2) to be filled and the interior space of the spare liquid container or liquid supply system and the device is further equipped with a lock-release mechanism for locking and releasing of the said connection, wherein the pouring unit comprises an outflow pipe (1), which is connected at one end to the feeding line or conduit (3) connected to the spare liquid container or installation and at the other end, the outflow pipe (1) is closed by means of a closure surface, wherein, at the side facing the closure surface, namely on its end segment close to the closure surface, the outflow pipe (1) has at least one side outflow opening (5, 6) disposed on a side surface thereof and the outflow pipe is further equipped with a closure pipe (7) slidably arranged with a clearance around its outer surface, which closure pipe (7) is in turn slidably mounted in a holder (8) of the pouring unit, moreover, over the outer surface of the outflow pipe (1), a biasing member is provided, preferably a spring (10) of the pouring unit, biasing the closure pipe (7) to the position in which it closes tightly at least one side outflow opening (5, 6) of the outflow pipe positioned in its rest position, while the filler unit comprises the inflow pipe (13), which is at one end terminated with the seat (14), for sealed receiving of the closure pipe, and at the other side the inflow pipe (13) is connected by means of a flow communication to the reservoir (2), **characterized in that** the lock-release mechanism is provided downstream of the filler unit, looking in the direction of the liquid flow into the reservoir (2) to be filled, for blocking the liquid communication between the outflow pipe (1) and the inner space of the reservoir (2) to be filled in a filling position of the device and for releasing the lock and at the same time for automatically closing the liquid communication after filling the reservoir (2) up to the given level or pressure value, wherein the lock-release mechanism comprises a liquid level sensor or filling pressure sensor, arranged in and/or on the reservoir (2) to be filled and an actuator member cooperating with a ratchet member (18, 28, 35) equipped with a latch projection (19, 28a) which is adapted in shape to a lock recess (40), located in vicinity of the closure surface on the closed end of the outflow pipe (1), which latch projection (19, 28a) is adapted to engage into this lock recess (40) of the outflow pipe (1) during movement of the outflow pipe (1) to the pouring position, which is its working position, and to exit from said lock recess (40) as a result of the action of an actuator member or by turning the outflow pipe (1) around its longitudinal axis to allow the outflow pipe (1) to return to its rest position, wherein the latch protrusion of the ratchet member (18, 28) is located to extend into the path of sliding movement of the outflow pipe, and in particular into the path of movement of the lock recess (40) of the outflow pipe (1) during its movement to the pouring position.

2. The pouring device according to claim 1, **characterized in that** it comprises a sealing provided between the outflow pipe (1) and the closure pipe (7), adapted in a such way to create a sealing between the outflow pipe (1) and the closure pipe (7) and at the same time to stop the outflow pipe (1) in its resting position and to protect it against pushing it too far into the closure pipe (7), in particular the sealing is in the form of "O-ring" gasket arranged in the groove of the closing cap (4) defining the closing surface of the outflow pipe (1).

3. The pouring device according to claims 1 or 2, **characterized in that** the actuator member may be in the form of at least one member selected of the following members: a lever, with each other, wherein the lock-release mechanism further comprises at least one actuating means selected from the group consisting of: a liquid level sensor or a pressure sensor, a float valve, an electric sensor and/or optoelectronic sensor which can be used individually or in combination with each other and arranged in and/or on the reservoir (2) to be filled.

4. The pouring device according to at least one of the preceding claims 1-3, **characterized in that** the lock recess (40) has preferably a form of a lock opening, which is, preferably, constituted by one of the at least one outflow opening (5 or 6) of the outflow pipe (1) of the pouring unit, and/or the outflow pipe (1) on its end facing the closure surface is provided with a cap (4), while the lock recess (40) is arranged on the side surface of the cap (4) of that outflow pipe (1).

5. The pouring device according to at least one of the claims 1-4, **characterized in that,** the pressure coil spring (10) of the pouring unit, arranged on the outer surface of the outflow pipe (1) inside the closure pipe (7) enclosing the outflow pipe from outside, is supported at one side by the inner radial projection (11) of the closure pipe (7), and at the other opposite side, by the abutment surface, which is preferably formed by a front face of the feeding line (3) or conduit (3) connected to the terminal screwed into the holder (8), wherein the other face of it extends to the spare liquid container.

6. The pouring device according to at least one of the preceding claims, **characterized in that** the holder (8) of the pouring unit is formed so as to indicate the correct insertion of the pouring unit into the seat (14) of the filler unit and/or on the outer surface of the tubular holder (8) of the pouring unit a marking is placed indicating the correct insertion position of the pouring unit into the seat (14) of the filler unit.

7. The pouring device according to at least one of the preceding claims, **characterized in that** the free end of the outflow pipe (1) of the pouring unit in the resting position is hidden and covered inside the closure pipe (7) and its outflow openings (5, 6) are closed by that closure pipe (7) and secured by a sealing against leakage of liquid from the outflow pipe (1) arranged at the outer surface of the outflow pipe (1) and/or a surface of the cap (4) close to its one projecting end and, on the inner surface of the closure pipe (7) at the one side and at the other side by the sealing of the O-ring type or a rolling diaphragm (41).

8. The pouring device according to claim 4, **characterized in that** the cap (4) arranged on the end of the outflow pipe (1) facing the closing surface is provided at its front side, in the front surface of the cap (4), with the recess, preferably in the shape of a cone, a cylinder or a section of a sphere, or another body of rotation, or any part thereof.

9. The pouring device according to at least one of the preceding claims, **characterized in that** the closure pipe (7) of the pouring unit is provided on the side facing toward the filler unit with the free end terminated slightly conically, wherein the cone convergence pointing towards this free end of the closure pipe (7) is preferably in the range within about 1-15°, wherein at that conical part of the end of the closure pipe (7) the sealing is disposed, preferably in the form of a sealing ring of the O-ring type.

10. The pouring device according to at least one of the preceding claims, **characterized in that** the filler unit has the seat (14) at the inlet side, preferably closable with the cover flap (30) or the lid, the seat (14) having an abutment surface for limiting movement of the closure pipe (7) of the pouring unit.

11. The pouring device according to at least one of the preceding claims, **characterized in that** the filler unit is preferably mounted directly on the body (15) of the reservoir (2) to be filled with the filled up liquid.

12. The pouring device according to at least one of the preceding claims, **characterized in that** the lock-release mechanism comprises a lever (17) of the float disposed in the reservoir (2) to be filled, wherein on one end of the lever arm the float member (16) is attached constituting the level sensor and the second end of the lever arm is pivotally mounted to the body (15) of the reservoir (2), said lever (17) is provided with a ratchet member positioned in the path of the sliding movement of the outflow pipe (1), and precisely the path of the lock recess (40) on the outflow pipe (1) during its movement from the rest position to the pouring position, preferably, then recess (40) is in the form of the outflow opening (5) in the outflow pipe (1).

13. The pouring device according to at least one of the claims 1 to 10, **characterized in that** the lock-release mechanism of the outflow pipe (1) has a separate casing (20) with the casing cover (21) of the lock-release mechanism, the casing (20) is attached, preferably, on the vehicle body, and which the casing (20) has a connection via a connecting line to the reservoir (2) to be filled with the filled liquid, wherein in the casing (20) of the lock-release mechanism the first spring (24) of the lock-release mechanism is inserted and mounted on the guiding rod (25) ended with the mushroom head (26), while in the casing cover (21) guide-press plunger (27) is arranged, biasing the ratchet member (28) equipped with the latch projection (28a) and the axle, wherein the second end of the axle is inserted into the opening of the casing cover (21), and wherein the latch projection (28a) is positioned in the path of the sliding movement of the outflow pipe (1), and particularly in the path of the movement of the lock recess (40) of the outflow pipe (1) of the pouring unit (N) in the direction to its pouring position, while on the axle of the ratchet member (28) a second pressure spring (29) of the lock-release mechanism is applied with the pressure member (31), preferably a nut, rested with the lower end on the guide-press plunger (27).

14. The pouring device according to claim 13 and at least one of the claims 1 to 10, **characterized in that** between the casing (20) and the casing cover (21) a diaphragm (22) is arranged, preferably extending between the guide-press plunger (27) and the ratchet member (28) wherein the guide-press plunger (27) is pressed against the ratchet member (28) by means of the diaphragm (22), preferably made of a flexible material.

15. The pouring device according to claim 13 and at least one of the claims 1-10, and 14, **characterized in that** the side surface of the mushroom head (26) of the guiding rod (25) is adapted in shape to the shape of an opening in the side wall of the casing (20) and preferably is equipped with a sealing arranged respectively for cooperation with the inner side surface of the opening (20) and/or with the end of the inflow pipe (13) while having its front face shaped convexly or concavely in a manner adapted to the shape of the front face of the cap (4) of the outflow pipe (1), wherein, preferably, a guide rod (25) comprises optionally or additionally a magnet.

16. The pouring device according to at least one of the claims 1-15, **characterized in that** the latch projection (28a) of the ratchet member (28) is shaped to allow its introduction into the lock recess (40), preferably constituted by one of the outflow opening (5) of the outflow pipe (1) wherein, preferably, the lower edge of the ratchet protrusion of the latch projection (28a) has a small arched recess.

17. The pouring device according to claim 13 and at least one of the claims 1-10, 14-16 **characterized in that** on the casing (20) of the lock-release mechanism a valve (32) is located adjacent to the stub pipe (23) for attachment of the feeding line, which valve feeds an ambient air from environment, in the pouring position of the outflow pipe (1), into the space between the front faces of the cap (4) of the outflow pipe (1) and the mushroom head (26) of the guide rod (25) of the first spring (24) of the lock-release mechanism, to ensure easy and reliable reversing back of the outflow pipe (1) into the rest position in the closure pipe (7) after releasing the lock of the lock projection (28a) of the ratchet member (28).

18. The pouring device according to at least one of the preceding claims, **characterized in that** the closure pipe (7) on its end facing the coil spring (10) has slightly divergent inner side surface and has the groove for the sealing, preferably having form of an O-ring and/or a rolling diaphragm (41), is formed by that closure pipe (7) and an additional sleeve (7') which is mounted on or into the closure pipe (7), preferably by means of a press-fit or threaded connection.

## Patentansprüche

1. Nachfüllvorrichtung zum Nachfüllen eines zu befüllenden Fluidtanks aus einem Fluidvorratsbehälter oder aus einer Fluidzufuhranlage, insbesondere zum Nachfüllen eines Fluidtanks einer Scheibenwaschanlage aus einem Fluidvorratsbehälter oder aus einem Verteiler, wobei die Nachfüllvorrichtung eine Einfüllöffnungseinheit und eine Fluidausgabeeinheit umfasst, welche ausgebildet sind, miteinander in eine Verbindung gebracht zu werden und eine abgedichtete Verbindung zwischen einem Innenraum des zu befüllenden Fluidtanks (2) und einem Innenraum des Fluidvorratsbehälters oder der Fluidzufuhranlage zu schaffen, und weiter mit einer Verriegelungs- und Entriegelungseinrichtung zur Verriegelung- und Entriegelung dieser Verbindung versehen ist, wobei die Fluidausgabeeinheit ein Ausgaberohr (1) umfasst, welches an dem einen Ende mit einer an den Fluidvorratsbehälter oder an die Fluidzufuhranlage anschliessende Versorgungslinie oder -leitung (3) verbunden und an dem anderen freien Ende mit einer Verschlussfläche geschlossen ist, wobei das Ausgaberohr (1) an der der Verschlussfläche zugewandten Seite, und zwar an seinem der Verschlussfläche naheliegenden Endabschnitt, mindestens eine seitliche an seiner Mantelfläche angeordnete Ausgabeöffnung (5, 6) aufweist und weiter ein verschiebbar mit einem Spiel um seiner Aussenfläche herum angeordnetes Verschlussrohr (7) aufweist, welches Verschlussrohr (7) seinerseits in einer Halterung (8) der Ausgabeeinheit verschiebbar angeordnet ist, und ferner auf der Aussenfläche des Ausgaberohres (1) ein Spannelement, vorzugsweise eine Feder (10) der Ausgabeeinheit, angeordnet ist, das das Verschlussrohr (7) in eine Stellung drückt, bei der es die mindestens eine seitliche Ausgabeöffnung (5, 6) des in seiner Ruheposition angeordneten Ausgaberohres (1) dichtend verschliesst, und die Ausgabeeinheit ein Einfüllrohr (13) umfasst, das auf der einen Seite mit einer Aufnahme (14) zur dichtenden Aufnahme des Verschlussrohres abgeschlossen und auf der anderen Seite mit dem zu befüllenden Fluidtank fluidverbunden ist, **dadurch gekennzeichnet, dass** stromabwärts der Einfüllöffnungseinheit, in Richtung der Strömung des nachzufüllenden Fluids zu dem zu befüllenden Fluidtank gesehen, eine Verriegelungs- und Entriegelungseinrichtung zur Verriegelung der Strömungsverbindung zwischen dem Ausgaberohr (1) und dem Innenraum des zu befüllenden Fluidtanks (2) in einer Ausgabeposition der Nachfüllvorrichtung sowie zur Entriegelung dieser Verriegelung unter einem selbststätigen Verschliessen dieser Strömungsverbindung nach dem Befüllen des Behälters (2) bis zu einem vorgegebenen Füllstand oder Druckwert angeordnet ist, welche Verriegelungs- und Entriegelungseinrichtung einen in und/oder an dem zu befüllenden Fluidtank (2) angeordneten Füllstandsensor bzw. einen Fluidbefülldrucksensor und einen Aktuator umfasst, der mit einem Rastelement (18, 28, 35) zusammenwirkt, das mit einem Rastvorsprung (19, 28a) versehen ist, dessen Form an eine der Verschlussfläche des geschlossenen Ende des Ausgaberohres (1) naheliegende Verriegelungsausnehmung (40) angepasst ist, welcher Rastvorsprung (19, 28a) ausgebildet ist, in diese Verriegelungsausnehmung (40) des Ausgaberohres (1) einzugreifen, wenn das Ausgaberohr (1) in die seine Arbeitsstellung definierende Ausggabeposition bewegt wird, und aus dieser Verriegelungsausnehmung (40) unter Wirkung des Aktuators oder durch Drehen des Ausggaberohres (1) um seine Längsachse hinauszugehen, damit das Ausgaberohr (1) in seine Ruhestellung zurückbewegt werden kann, wobei der Rastvorsprung des Rastelements (18, 28) in einer Verschiebungsbahn des Ausgaberohres (1), insbesondere in einer Bewegungsbahn der Verriegelungsausnehmung (40) des Ausgaberohres (1), angeordnet ist, wenn dieses in Richtung der Ausgabeposition bewegt wird.

2. Nachfüllvorrichtung nach Anspruch 1, **dadurch gekennzeichnet, dass** sie eine zwischen dem Ausgaberohr (1) und dem Verschlussrohr (7) angeordnete und derart ausgewählte Abdichtung aufweist, dass diese eine Abdichtung zwischen dem Ausgaberohr (1) und dem Verschlussrohr (7) bildet und zugleich das Ausgaberohr (1) in seiner Ruhestellung hält und dieses gegen Anpressen und übermässigem Verschieben ins Innere des Verschlussrohres (7), insbesondere diese Abdichtung eine O-ringförmige Abdichtung ist, die in einer Nut eines Verschlussstopfens (4) des Ausgaberohres (1) angeordnet ist.

3. Nachfüllvorrichtung nach Anspruch 1 oder 2, **dadurch gekennzeichnet, dass** der Aktuator als mindestens ein Element ausgebildet ist, das aus der Gruppe, umfassend ein Hebel, einen mit einem Seilzug verbundenen Hebel, einen Elektromagnet (E), einen Elektromotor, einen Führungs- und Anpresskolben (27), eine Membran (22), einen Seilzug oder eine beliebige Kombination dieser Elemente miteinander, ausgewählt ist, wobei ferner die Verriegelungs- und Entriegelungseinrichtung mindestens ein Betätigungsmittel umfasst, das aus der Gruppe, umfassend einen Füllstandsensor oder einen Fluiddrucksensor, einen Schwimmerventil, einen elektrischen und/oder einen optoelektronischen Sensor ausgewählt ist, welche Mittel einzeln oder in einer Kombination miteinander eingesetzt und in und/oder an dem zu befüllenden Fluidtank angeordnet werden können.

4. Nachfüllvorrichtung nach mindestens einem der vorhergehenden Ansprüche 1-3, **dadurch gekennzeichnet, dass** die Verriegelungsausnehmung (40) vorzugsweise als eine Verriegelungsöffnung ausgebildet ist, die vorzugsweise mindestens eine der mindestens einer Ausgabeöffnung (5 oder 6) des Ausgaberohres (1) der Ausgabeeinheit ist, und/oder das Ausgaberohr (1) an seiner der Verschlussfläche zugewandten Seite mit einem Stopfen (4) versehen ist und die Verriegelungsausnehmung (40) an der Mantelfläche des Stopfens (4) dieses Ausgaberohres (1) angeordnet ist.

5. Nachfüllvorrichtung nach mindestens einem der vorhergehenden Ansprüche 1-3, **dadurch gekennzeichnet, dass** die an der Aussenfläche des Ausgaberohres (1) im Inneren des dieses Ausgaberohr (1) von aussen umschliessenden Verschlussrohr (7) angeordnete Druckfeder (10) der Ausgabeeinheit an der einen Seite an einem radialen Innenvorsprung (11) des Verschlussrohres (7) und an der anderen gegenüberliegenden Seite an einer, vorzugsweise durch eine Stirnfläche der an eine in die Halterung (8) der Ausgabeeinheit eingeschraubte Klemme angeschlossenen Versorgungslinie (3) oder der Versorgungsleitung (3) gebildeten Anschlagfläche abgestützt wird, wobei ihre andere Stirnfläche sich bis zu dem zu befüllenden Fluidtank erstreckt.

6. Nachfüllvorrichtung nach mindestens einem der vorhergehenden Ansprüche, **dadurch gekennzeichnet, dass** die Halterung (8) der Ausgabeeinheit derart ausgebildet ist, dass daraus die richtige Einführung der Ausgabeeinheit in die Aufnahme (14) der Einfüllöffnungseinheit erkennbar ist und/oder auf der Aussenfläche der rohrförmigen Halterung (8) der Ausgabeeinheit eine Markierung angeordnet ist, aus der die richtige Einführung der Ausgusseinheit in die Aufnahme (14) der Einfüllöffnungseinheit erkennbar ist.

7. Nachfüllvorrichtung nach mindestens einem der vorhergehenden Ansprüche, **dadurch gekennzeichnet, dass** das Ausgaberohr (1) in seiner Ruhestellung innerhalb des Verschlussrohres (7) eingefahren und abgedeckt ist und seine Ausgabeöffnungen (5, 6) durch dieses Verschlussrohr (7) geschlossen sowie gegen Fluidaustritt aus dem Ausgaberohr (1) mittels einer auf der Aussenfläche des Ausgaberohres (1) und/oder auf der Oberfläche des Stopfens (4) in der Nähe von dem einen herausragenden Ende des Ausgaberohres (1) und an der Aussenfläche des Verschlussrohres (7) angeordneten Abdichtung einerseits und einer nach Art eines O-Ring ausgebildeten Dichtung oder einer Rollmembrane (41) andererseits gesichert sind.

8. Nachfüllvorrichtung nach Anspruch 4, **dadurch gekennzeichnet, dass** der an dem der Verschlussfläche zugewandten Ende des Ausgaberohres (1) angeordnete Stopfen (4) eine auf seiner Vorderfläche in der Stirnfläche des Stopfens (4) ausgebildete Vertiefung aufweist, die vorzugsweise konisch, zylinder- oder kugelsektorförmig bzw. als einen anderen beliebigen Rotationskörper oder dessen Teil ausgebildet ist.

9. Nachfüllvorrichtung nach mindestens einem der vorhergehenden Ansprüche, **dadurch gekennzeichnet, dass** das Verschlussrohr (7) der Ausgabeeinheit auf der der Einfüllöffnungseinheit zugewandten Seite ein aussenliegendes, freies, leicht konisch zulaufendes Ende aufweist, dessen Konizität diesem freien Ende des Verschlussrohres (7) zugewandt ist und vorzugsweise zwischen 1-15° liegt, wobei an diesem konischen Endsbschnitt des Verschlussrohres (7) eine Abdichtung, vorzugsweise in Form eines O-Rings, angeordnet ist.

10. Nachfüllvorrichtung nach mindestens einem der vorhergehenden Ansprüche, **dadurch gekennzeichnet, dass** die Einfüllöffnungseinheit auf der Einlaufseite eine, vorzugsweise mit einer Verschlussklappe (30) oder mit einem Deckel verschliessbare Aufnahme (14) aufweist, welche Aufnahme (14) eine Anschlagfläche zur Begrenzung der Bewegung des Verschlussrohres (7) der Ausgabeeinheit aufweist.

11. Nachfüllvorrichtung nach mindestens einem der vorhergehenden Ansprüche, **dadurch gekennzeichnet, dass** die Einfüllöffnungseinheit vorzugsweise direkt in dem Körper (15) des zu befüllenden Fluidtank (2) befestigt ist.

12. Nachfüllvorrichtung nach mindestens einem der vorhergehenden Ansprüche, **dadurch gekennzeichnet, dass** die Verriegelungs- und Entriegelungseinrichtung einen in dem zu befüllenden Fluidtank (2) angeordneten Schwimmerhebel (17) aufweist, wobei auf dem einen Ende des Hebelarms ein als einen Füllstandsensor fungierenden Schwimmer (16) befestigt ist und der andere Hebelarm an dem Körper (15) des Fluidtanks (2) schwenkbar befestigt ist, welcher Hebel (17) mit einem Rastelement versehen ist, das in einer Verschiebungsbahn des Ausgaberohres (1), insbesondere der Verriegelungsausnehmung (40) des Ausgaberohres (1), angeordnet ist, wenn dieses sich aus seiner Ruhestellung in seine Ausgabeposition bewegt, wobei die Vertiefung (40) vorzugsweise als eine Ausgabeöffnung (5) in dem Ausgaberohr (1) ausgebildet ist.

13. Nachfüllvorrichtung nach mindestens einem der Ansprüche 1 bis 10, **dadurch gekennzeichnet, dass** die Verriegelungs- und Entriegelungseinrichtung des Ausgaberohres (1) einen eigenen Körper (20) mit einem Körperdeckel (21) der Verriegelungs- und Entriegelungseinrichtung aufweist, welcher Körper (20) vorzugsweise an dem Kraftfahrzeugkarosserie befestigt ist und welcher Körper (20) durch eine Verbindungsleitung mit dem zu befüllenden Fluidtank (2) für das nachzufüllende Fluid verbunden ist, wobei in den Körper (20) der Verriegelungs- und Entriegelungseinrichtung eine erste an einer mit einem Pilzkopf (26) abgeschlossenen Führungsstange (25) gelagerte Feder (24) der Verriegelungs- und Entriegelungseinrichtung eingeführt ist und in dem Körperdeckel (21) ein Führungs- und Anpresskolben (27) angeordnet ist, durch den das mit einem Rastvorsprung sowie eine Achse versehene Rastelement (28a) gedrückt ist, deren anderes Ende in eine Öffnung des Körperdeckels (21) eingeführt ist, wobei der Rastvorsprung (28a) in einer Verschiebungsbahn des Ausgaberohres (1), insbesondere in einer Bewegungsbahn der Verriegelungsausnehmung (40) des Ausgaberohres (1), angeordnet ist, wenn dieses sich in Richtung seiner Ausgabeposition bewegt, und an die Achse des Rastelements (28) eine weitere Druckfeder (29) der Verriegelungs- und Entriegelungseinrichtung aufgesteckt ist, die mit einem Anpresselement (31), vorzugsweise mit einer Mutter, versehen ist, die sich mit ihrem unteren Ende an dem Führungs- und Anpresskolben (27) abstützt.

14. Nachfüllvorrichtung nach Anspruch 13 und mindestens einem der Ansprüche 1 bis 10, **dadurch gekennzeichnet, dass** zwischen dem Körper (20) und dem Körperdeckel (21), vorzugsweise zwischen dem Führungs- und Anpresskolben (27) und dem Rastelement (28), eine Membran (22) angeordnet ist, wobei der Führungs- und Anpresskolben (27) durch diese, vorzugsweise aus einem elastischen Material bestehende, Membran (22) an das Rastelement (28) angepresst ist.

15. Nachfüllvorrichtung nach Anspruch 13 und mindestens einem der Ansprüche 1 bis 10 und 14, **dadurch gekennzeichnet, dass** die Mantelfläche des Pilzkopfs (26) der Führungsstange (25) an die Wandöffnungsform des Körpers (20) angepasst ist und vorzugsweise eine entsprechend angeordnete Abdichtung aufweist, die mit der Innenmantelfläche der Öffnung (20) und/oder dem Ende des Ausgaberohres (1) zusammenwirkt, und seine Stirnfläche konvex oder konkav ausgebildet ist, derart, dass diese an die Stirnfläche des Stopfens (4) des Ausgaberohres (1) angepasst ist, wobei vorzugsweise die Führungsstange (25) optional oder zusätzlich einen Magnet umfasst.

16. Nachfüllvorrichtung nach mindestens einem der Ansprüche 1-15, **dadurch gekennzeichnet, dass** der Rastvorsprung (28a) des Rastelements (28) eine, vorzugsweise durch eine Ausgabeöffnung (5) des Ausgaberohres (1) gebildete Form aufweist, durch die es in die Verriegelungsausnehmung (40) einführbar ist, wobei die Unterkante des Rastvorsprungs (28a) des Rastelements (28) vorzugsweise eine geringe bogenförmige Ausnehmung aufweist.

17. Nachfüllvorrichtung nach Anspruch 13 und mindestens einem der Ansprüche 1-10, 14-16, **dadurch gekennzeichnet, dass** an dem Körper (20) der Verriegelungs- und Entriegelungseinrichtung benachbart zu dem Anschlussstutzen für die Zufuhrleitung ein Ventil angeordnet ist, durch das die Umgebungsluft bei der Ausgabestellung des Ausgaberohres (1) in den Raum zwischen den Stirnflächen des Stopfens (4) des Ausgaberohres (1) und des Pilzkopfs (26) der Führungsstange (25) der ersten Feder (24) der Verriegelungs- und Entriegelungseinrichtung zugeführt wird, um eine einfachere und zuverlässige Rückführung des Ausgaberohres (1) in die Ruhestellung in dem Verschlussrohr (7) zu gewährleisten, nachdem die Verriegelung durch das Rastvorsprung (28a) des Rastelements (28) aufgehoben wird.

18. Nachfüllvorrichtung nach mindestens einem der vorhergehenden Ansprüche, **dadurch gekennzeichnet, dass** das Verschlussrohr (7) an seinem der Feder (10) zugewandten Ende eine leicht divergierende Mantelfläche und eine Nut für eine vorzugsweise nach Art eines O-Rings oder einer Rollmembrane (41) ausgebildete Abdichtung aufweist, welche Nut durch dieses Verschlussrohr (7) sowie durch eine zusätzliche Hülse (7') ausgebildet ist, die an oder in dem Verschlussrohr (7), vorzugsweise durch eine Press- oder Schraubverbindung, angeordnet ist.

## Revendications

1. Dispositif de versement pour compléter le liquide dans un réservoir à remplir à partir d'un réservoir de liquide de secours ou d'une installation d'alimentation en liquide, en particulier pour compléter le liquide dans un réservoir du lave-glace de glace d'une voiture à partir d'un réservoir de liquide ou d'un distributeur, le dispositif comprenant un ensemble de remplissage et un ensemble de verseur du liquide qui sont adaptés à être assemblés et à former un assemblage étanche entre l'espace interne du résevoir à remplir (2) et l'espace interne du réservoir contenant le liquide qui est complété ou de l'installation d'alimentation en liquide, et il est en outre muni d'un mécanisme de blocage et de déclenchement pour bloquer cet assemblage et le déclencher, l'ensemble de verseur comprenant un tube de versement (1) qui du côté d'un bout est lié à une ligne ou à une conduite d'alimentation (3), qui est lié au réservoir ou à l'installation de liquide qui est complété, et du côté de l'autre bout, libre, le tube de versement (1) est fermé par une surface de fermeture, le tube de versement (1) possédant du côté dirigé vers la surface de fermeture, à savoir sur son segment terminal proche de la surface de fermeture, au moins un orifice de versement latéral (5,6) située à sa surface latérale et étant muni en outre d'un tube de fermeture (7) mobile avec un jeu autour de sa surafce externe, lequel tube de fermeture (7) est à son tour placé comme mobile dans un manchon (8) de l'ensemble de verseur, en outre, à la surface externe du tube de versement (1) est placé un élément de tension, de préférence un ressort (10) de l'ensemble de verseur, poussant le tube de fermeture (7) vers une position dans laquelle il ferme de manière étanche au moins un orifice de versement latéral (5,6) du tube de versement qui se trouve dans sa position de repos, et l'ensemble de remplissage comprenant un tube de remplissage (13), terminé d'un côté par un logement (14), pour l'installation étanche du tube de fermeture, et de l'autre côté, le tube de remplissage (13) est assemblé de manière à permettre l'écoulement du liquide, au réservoir à remplir (2), **caractérisé en ce qu'**en aval de l'ensemble de remplissage, en regardant vers la direction de l'écoulement du liquide à compléter vers le réservoir à remplir (2) est placé un mécanisme de blocage et de déclenchement pour bloquer l'assemblage d'écoulement entre le tube de versement (1) et l'espace interne du réservoir à remplir (2) en position de remplissage du dispositif et pour le déclenchement de ce blocage et en même temps une fermeture automatique de cet assemblage d'écoulement après le remplissage du réservoir (2) jusqu'au niveau de consigne ou la valeur de consigne de la pression, lequel mécanisme de blocage et de déclenchement comprend un capteur de niveau du liquide ou de pression de remplissage du liquide, situé dans et/ou sur le réservoir à remplir (2) et un élément actionneur coopérant avec un élément de déclic (18, 28, 35), muni d'une saillie de déclic (19, 28a) qui est adaptée par sa forme à l'évidement de blocage (40) situé près de la surface de fermeture du bout fermé du tube de versement (1), laquelle saillie de déclic (19, 28a) est adaptée à entrer dans cet évidement de blocage (40) du tube de versement (1), pendant le déplacement du tube de versement (1) vers la position de remplissage qui est sa position de travail, et à sortir de cet évidement de blocage (40) suite à l'action de l'élément actionneur ou suite à la rotation du tube de versement (1) autour de son axe longitudinal afin de permettre le retour du tube de versement (1) vers sa position de repos, la saillie de déclic de l'élément de déclic (18, 28) étant située dans le trajet du mouvement de translation du tube de versement, et en particulier dans le trajet du mouvement de l'évidement de blocage (40) du tube de versement (1) pendant son déplacement vers la direction de la position de remplissage.

2. Dispositif de versement selon la revendication 1, **caractérisé en ce qu'**il comprend un joint d'étanchéité situé entre le tube de versement (1) et le tube de fermeture (7) choisi de manière à former un joint d'étanchéité entre le tube de versement (1) et le tube de fermeture (7) et à arrêter en même temps le tube de versement (1) dans sa position de repos et à protéger contre sa poussée et sa translation trop loin dans le fond du tube de fermeture (7), en particulier le joint a la forme d'un joint de type "O-ring", placé dans une gorge du bouchon de fermeture (4) du tube de versement (7).

3. Dispositif de versement selon la revendication 1 ou 2, **caractérisé en ce que** l'élément actionneur a la forme d'au moins un élément choisi parmi les éléments suivants : levier, levier à brin, électroaimant (E), moteur électrique, piston de guidage-de poussée (27), membrane (22), brin ou une combinaison libre de ces éléments entre eux, le mécanisme de blocage et de déclenchement comprenant en outre au moins un moyen d'action choisi du groupe comprenant : capteur de niveau du liquide ou capteur de pression du liquide, vanne de niveau, palpeur électrique et/ou palpeur optoélectrique qui peuvent être utilisés individuellement ou combinés entre eux et placés dans et/ou sur le réservoir à remplir (2).

4. Dispositif de versement selon au moins une des revendications précédentes 1-3, **caractérisé en ce que** l'évidement de blocage (40) a de préférence la forme d'un orifice de blocage qui constitue, de préférence, un d'au moins un des orifices de versement (5 ou 6) du tube de versement (1) de l'ensemble de verseur, et/ou le tube de versement (1) est muni du côté de son bout dirigé vers la surface de fermeture d'un bouchon (4), et l'évidement de blocage (40) est situé à la surface latérale du bouchon (4) de ce tube de versement (1).

5. Dispositif de versement selon au moins une des revendications 1-4, **caractérisé en ce que** le ressort de poussée (10) de l'ensemble de verseur, placé à la surface externe du tube de versement (1), à l'intérieur du tube de fermeture (7) qui entoure ce tube de versement (1) de l'extérieur, repose d'un côté sur la saillie interne radiale (11) du tube de fermeture (7), et de l'autre côté, opposé, sur la surface d'appui qui est de préférence constituée par la surface frontale de la ligne d'alimentation (3) ou de la conduite d'alimentation (3) liée à un pince vissé dans le manchon (8) de l'ensemble de verseur, sa deuxième surface frontale touchant le réservoir de liquide à remplir.

6. Dispositif de versement selon au moins une des revendications précédentes, **caractérisé en ce que** le manchon (8) de l'ensemble de verseur est formé de manière à indiquer une bonne mise en place de l'ensemble de verseur dans le logement (14) de l'ensemble de remplissage et/ou à la surface externe du manchon tubulaire (8) de l'ensemble de verseur se trouve un symbole indiquant la bonne position de la mise en place de l'ensemble de verseur dans le logement (14) de l'ensemble de remplissage.

7. Dispositif de versement selon au moins une des revendications précédentes, **caractérisé en ce que** dans la position de repos le tube de versement (1) de l'ensemble de verseur est caché et couvert à l'intérieur du tube de fermeture (7), et ses orifices de versement (5,6) sont fermés par ce tube de fermeture (7) et protégés contre la fuite du liquide du tube de versement (1) à l'aide d'un joint, placé à la surface externe du tube de versement (1) et/ou à la surface du bouchon (4), près de l'un de ses bouts saillants et à la surface interne du tube de fermeture (7) d'un côté, et de l'autre, à l'aide d'un joint de type o-ring ou d'une membrane enroulable (41).

8. Dispositif de versement selon la revendication 4, **caractérisé en ce que** le bouchon (4) situé du côté de la surface de fermeture au bout du tube de versement (1) est muni à sa surface avant, dans la surface frontale du bouchon (4), d'une cavité, de préférence de forme conique, cylidrique ou de section d'une sphère ou ayant la forme d'un autre solide de révolution quelconque ou de sa partie.

9. Dispositif de versement selon au moins une des revendications précédentes, **caractérisé en ce que** le tube de fermeture (7) de l'ensemble de verseur a un bout externe libre du côté dirigé dans la direction de l'ensemble de remplissage à une fin légèrement cônique, la convergence du cône étant dirigée vers le côté de ce bout libre du tube de fermeture (7) et appartenant de préférence à l'intervalle de 1-15°, un joint, de préférence sous forme d'une bague d'étanchéité de type O-ring étant placé sur cette partie cônique du bout du tube de fermeture (7).

10. Dispositif de versement selon au moins une des revendications précédentes, **caractérisé en ce que** l'ensemble de remplissage possède du côté de l'entrée le logement (14), de préférence fermable par un volet de fermeture (30) ou par un couvercle lequel logement (14) est muni d'une surface d'appui pour limiter le mouvement du tube de fermeture (7) de l'ensemble de verseur.

11. Dispositif de versement selon au moins une des revendications précédentes, **caractérisé en ce que** l'ensemble de remplissage est de préférence fixé directement dans le corps (15) du résevoir de liquide à remplir (2).

12. Dispositif de versement selon au moins une des revendications précédentes, **caractérisé en ce que** le mécanisme de blocage et de déclenchement comprend un levier (17) du flotteur placé dans le réservoir à remplir (2), le flotteur (16) constituant un capteur de niveau étant fixé à l'un des bouts du bras de levier, et l'autre bout du bras de levier étant fixé de manière pivotante au corps (15) du résevoir (2), lequel levier (17) est muni d'un élément de déclic situé dans la trajectoire du mouvement de translation du tube de versement (1), et précisement de l'évidement de blocage (40) sur le tube de versement (1) pendant son déplacement de la position de repos vers la position de remplissage, de préférence l'évidement (40) a la forme d'un orifice de versement (5) dans le tube de versement (1).

13. Dispositif de versement selon au moins une des revendications 1 à 10, **caractérisé en ce que** le mécanisme de blocage et de déclenchement du tube de versement (1) possède un corps à part (20) avec une couvercle (21) du corps du mécanisme de blocage et de déclenchement lequel corps (20) est fixé, de préférence, sur la carrosserie du véhicule, et lequel corps (20) est muni d'un assemblage à l'aide d'un conduit d'intercommunication avec le réservoir de liquide à remplir (2), un premier ressort (24) du mécanisme de blocage et de déclenchement, encastré sur une tige de guidage (25) terminé par un clapet (26) étant introduit dans corps (20) du mécanisme de blocage et de déclenchement, et dans le couvercle (21) du corps étant placé un piston de guidage et de poussée (27), poussant l'élément de déclic (28a) muni d'une saillie de déclic et d'un axe, le deuxième bout de cet axe étant introduit dans l'orifice du couvercle (21) du corps, la saillie de déclic (28a) étant située dans la trajectoire du mouvement de translation du tube de versement (1), et en particulier dans la trajectoire du mouvement de l'évidement de blocage (40) du tube de versement (1) de l'ensemble de verseur dans la direction de sa position de versement, et un deuxième ressort de poussée (29) du mécanisme de blocage et de déclenchement avec un élément de pousée (31) de préférence un écrou, appuyé par son bout inférieur sur le piston de guidage et de poussée (27) étant posé sur l'axe de l'élément de déclic (28).

14. Dispositif de versement selon la revendication 13 et au moins une des revendications 1 à 10, **caractérisé en ce qu'**une membrane (22) est placée entre le corps (20) et le couvercle (21) du corps, de préférence située entre le piston de guidage et de poussée (27) et l'élément de déclic (28), le piston de guidage et de poussée (27) étant serré contre l'élément de déclic (28) par cette membrane (22), de préférence réalisée en matière flexible.

15. Dispositif de versement selon la revendication 13 et au moins une des revendications 1 - 10 et 14, **caractérisé en ce que** la surface latérale du clapet (26) de la tige de guidage (25) est ajustée à la forme de l'orifice dans la paroi du corps (20) et de préférence est munie d'un joint situé de manière appropriée, coopérant avec la surface interne latérale de l'orifice (20) et/ou le bout du tube de remplissage (13) et sa surface frontale est formée de manière convexe ou concave, de façon ajustée à la surface frontale du bouchon (4) du tube de versement (1), la tige de guidage (25) comprenant, de préférence, en option ou à titre supplémentaire, un aimant.

16. Dispositif de versement selon au moins une des revendications 1 - 15, **caractérisé en ce que** la saillie de déclic (28a) de l'élément de déclic (28) a une forme permettant son introduction dans l'évidement de blocage (40), de préférence formée par un orifice de versement (5) du tube de versement (1), le bord inférieur de la saillie de déclic de l'élément de déclic (28a) possédant, de préférence, un petit évidement arqué.

17. Dispositif de versement selon la revendication 13 et au moins une des revendications 1-10, 14-16, caractérisé en ceque sur le corps (20) du mécanisme de blocage et de déclenchement dans le voisinage d'une tubulure (23) pour le raccordement d'une conduite d'amenée est situé un clapet (32), d'amenée d'air du milieu ambiant en position de remplissage du tube de versement (1) dans l'espace entre les surfaces frontales du bouchon (4) du tube de versement (1) et du clapet (26) de la tige de guidage (25) du premier ressort (24) du mécanisme de blocage et de déclenchement, en vue d'assurer un recul plus facile et fiable du tube de versement (1) vers la position de repos dans le tube de fermeture (7) après le déclenchement du blocage par la saillie de déclic (28a) de l'élément de déclic (28).

18. Dispositif de versement selon au moins une des revendications précédentes, **caractérisé en ce que** le tube de fermeture (7) possède à son bout du côté du ressort (10) une surface interne latérale légèrement divergente et une gorge pour le joint, de préférence sous forme d'une bague de type O-ring et/ou d'une membrane enroulable (41), qui est formée par ce tube de fermeture (7) et par un manchon supplémentaire (7') qui est encastré de préférence à l'aide d'un assemblage en emmanchement ou par filetage, sur ou dans le tube de fermeture (7).
